Europäisches Patentamt

European Patent Office

Office européen des brevets

(11) Veröffentlichungsnummer: **0 348 383**
A2

# (12) EUROPÄISCHE PATENTANMELDUNG

(21) Anmeldenummer: **89890168.1**

(22) Anmeldetag: **15.06.89**

(51) Int. Cl.⁴: **B 60 K 15/00**
B 62 D 21/16, B 62 D 25/20

(30) Priorität: **22.06.88 AT 1612/88**

(43) Veröffentlichungstag der Anmeldung:
**27.12.89 Patentblatt 89/52**

(84) Benannte Vertragsstaaten:
**CH DE FR GB IT LI**

(71) Anmelder: **STEYR-DAIMLER-PUCH
AKTIENGESELLSCHAFT
Franz-Josefs-Kai 51
A-1010 Wien (AT)**

(72) Erfinder: **Schröck, Manfred
Teufelsgraben 20
A-4484 Kronstorf (AT)**

(54) **Fussboden für Kraftfahrzeuge, insbesondere Fahrerhausboden.**

(57) Ein Fußboden (3) für Kraftfahrzeuge (1) besteht aus einem auf dem Fahrgestell (5) od.dgl. aufsetzbaren einheitlichen Bauteil.

Um die Bodenherstellung zu vereinfachen und vorhandene Leerräume zweckmäßig nutzen zu können, ist der Bauteil in Form eines Kunststoffhohlkörpers (4) vorgefertigt und bildet selbst einen Kraftstoffbehälter.

FIG.1

EP 0 348 383 A2

Bundesdruckerei Berlin

## Beschreibung

Die Erfindung bezieht sich auf einen Fußboden für Kraftfahrzeuge, insbesondere Fahrerhausboden, bestehend aus einem auf dem Fahrgestell befestigbaren, vorgefertigten einheitlichen Bauteil aus Kunststoff.

Gemäß der DE-A-30 19 972 gibt es bereits einen Fahrerstand für Motorfahrzeuge, der als Baueinheit vorgefertigt ist und ein auf dem Bodenblech aufgeschweißtes prismatisches Gehäuse zur drehsteifen Verbindung der Seitenteile aufweist, welches Gehäuse gleichzeitig auch als Kraftstoffbehälter Verwendung finden kann. Es handelt sich hier um eine ganz spezielle, recht aufwendige Fahrerstandskonstruktion, die den Unterbau für den Fahrersitz zur Unterbringung des Kraftstoffbehälters nützt, der dadurch allerdings in seinem Fassungsraum recht beschränkt bleiben muß. Aus der DE-A-20 63 320 geht auch schon ein Schlepper als bekannt hervor, der Schutzrahmenwangen mit Kastenquerschnitt besitzt und in den durch den Kastenquerschnitt gegebenen Hohlräumen die Brennstoffbehälter aufnimmt. Es kommt zu einer recht schweren Bauweise, die nur verhältnismäßig wenig Platz für die Kraftstoffbehälter bietet und einen oberhalb der Kraftstoffbehälter verlaufenden Fußboden für das Fahrerhaus verlangt. Wie die DE-A-1 655 937 zeigt, wurde auch schon vorgeschlagen, die verschiedenen Teile eines Traktorfußbodens zu einer Baueinheit vorzufertigen und zur Vibrationsdämpfung am Fahrgestell elastisch abzustützen, doch gibt es im Bereich dieser Baueinheit keinen Raum für die Kraftstoffbehälter, die daher in unerwünschter Weise für sich am Fahrgestell montiert werden müssen. Ähnliches gilt für die DE-A-23 41 622, die eine aus Verbundmaterial hergestellte Fahrerstandwanne zum Inhalt hat. Diese Wanne besteht aus zwei Kunststoff- oder Blechschalen, deren Zwischenraum mit Schwermaterialien, wie Sand, Bitumen od.dgl., ausgefüllt ist, und läßt sich als einheitlicher Bauteil am Fahrgestell befestigen, so daß zwar die Dämmwirkung verbessert werden kann, aber es keine Erleichterung für die Anordnung der wegen ihrer Größe und Sperrigkeit überall störenden und wertvollen Raum beanspruchenden Kraftstoffbehälter gibt. Weiters sind aus der GB-A-21 18 109 auch schon Schutzeinsätze für den Laderaum von Kombiwagen bekannt, die als einheitliche Bauteile aus Kunststoff vorgefertigt sind und zusammenklappbare, offene Behälter bilden, die zwar Reservekanister aufnehmen, aber nicht selbst Kraftstoffbehälter sein können.

Der Erfindung liegt daher die Aufgabe zugrunde, einen Fußboden der eingangs geschilderten Art zu schaffen, der rationell zu fertigen und zu montieren ist und der sich nicht nur durch seine guten Dämmeigenschaften auszeichnet, sondern auch eine platzsparende Anordnung eines entsprechend großvolumigen Kraftstoffbehälters gewährleistet.

Die Erfindung löst diese Aufgabe dadurch, daß der Bauteil in Form eines geschlossenen Hohlkörpers ausgebildet ist und selbst einen Kraftstoffbehälter bildet. Der als Fußboden dienende Kunststoffhohlkörper kann in seiner Ausgestaltung an alle im Fußbodenbereich vorhandenen Freiräume des Fahrgestells bzw. Fahrzeugaufbaues optimal angepaßt werden, so daß praktisch ohne spürbaren Platzverlust ein Kraftstoffbehälter großen Fassungsvermögens entsteht. Der Kunststoffhohlkörper läßt sich beispielsweise im Sturzgußverfahren trotz seiner von den jeweiligen baulichen Gegenheiten des Fahrzeuges abhängigen ungewöhnlichen Gestaltung wirtschaftlich herstellen, er ist leicht zu handhaben und geschickt zu montieren, wozu noch kommt, daß der Kunststoffhohlkörper an sich eine hohe Eigensteifigkeit aufweist und beste Dämmeigenschaften besitzt. Die Oberfläche des Kunststoffhohlkörpers kann mit einer entsprechenden Profilierung versehen sein, so daß sich ohne zusätzlichen Bodenbelag oder eine eigene Auflage ein rutschfester, vom Fahrer angenehm empfundener Fußboden ergibt.

Weist der Hohlkörper der Höhe nach verlaufende, den Hohlraum durchsetzende Durchführungen zur Aufnahme von Stützhülsen und Befestigungsschrauben auf, braucht der Hohlkörper zur Montage lediglich an entsprechenden Auflagern des Fahrgestells angeschraubt zu werden, wobei die Stützhülsen die Spannkräfte der Bodenbefestigung aufnehmen und die Durchführungen selbst den Hohlkörper ausreichend drucksteif machen.

Weist der Hohlkörper abgetrennte Kammern und/ oder längsverlaufende Kanäle zur Aufnahme von Fahrzeugeinrichtungen und -zubehör auf, entstehen auf einfache Weise vorbereitete Unterbringungsmöglichkeiten für verschiedene Einrichtungen und Geräte sowie Kabelschächte u.dgl. im Fußbodenbereich.

In der Zeichnung ist der Erfindungsgegenstand beispielsweise dargestellt, und zwar zeigen

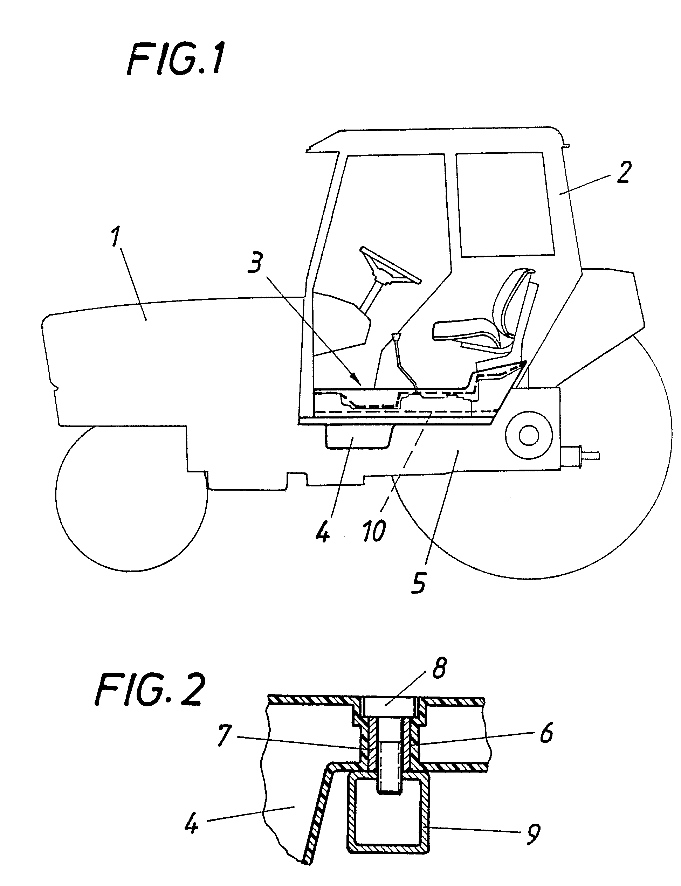

Fig. 1 einen Ackerschlepper mit erfindungsgemäßem Fahrerhausboden in schematischer Seitenansicht und

Fig. 2 einen Befestigungspunkt des Fußbodens als Detail im Querschnitt größeren Maßstabes.

Um einen Ackerschlepper 1 in seinem Fahrerhaus 2 mit einem dämpfenden und isolierenden, rutschfesten und bequemen Fußboden 3 auszustatten und außerdem einen verhältnismäßig großvolumigen Kraftstoffbehälter rationell und platzsparend unterbringen zu können, besteht der Fußboden 3 aus einem Kunststoffhohlkörper 4, der selbst den Kraftstoffbehälter bildet und als vorgefertigte Baueinheit auf tragenden Teilen des Fahrgestelles 5 bzw. des Fahrerhauses 2 aufgesetzt und festgeschraubt ist. Dazu weist der Hohlkörper 4 der Höhe nach verlaufende Durchführungen 6 auf, durch die hindurch unter Zwischenlage von metallenen Distanzhülsen 7 Befestigungsschrauben 8 in entsprechende Fahrerhausprofile 9 od.dgl. einschraubbar sind und eine Fuß bodenmontage ohne übermäßige Hohlkörperbelastung gewährleisten.

Der Kunststoffhohlkörper 4 läßt sich in wirtschaftlicher Weise sehr genau an die gegebenen Zwischen- und Leerräume im Bereich des Fahrerhausbodens anpassen, so daß ein großvolumiger Kraftstoffbehälter entsteht und dieser Kraftstoffbehälter nur anderwertig nicht nutzbaren Freiraum einnimmt. Der Kunststoffhohlkörper 4 ist material- und formbedingt ausreichend stabil und besitzt ausgezeichnete Dämpf- und Isoliereigenschaften, wobei sich durch geeignete Oberflächenprofilierungen von selbst gute Tritt- und sichere Standbedingungen ergeben. Durch entsprechende, nur angedeutete längsverlaufende Kanäle 10 oder andere abgetrennte Kammern können im Hohlkörper 4 bereits Kabelschächte oder Aufnahmeräume für Einrichtungen und Zubehör des Fahrzeuges vorbereitet und damit die Installations- und Ausstattungsarbeiten erleichtert werden.

## Patentansprüche

1. Fußboden (3) für Kraftfahrzeuge (1), insbesondere Fahrerhausboden, bestehend aus einem auf dem Fahrgestell (5) befestigbaren, vorgefertigten einheitlichen Bauteil aus Kunststoff, **dadurch gekennzeichnet**, daß der Bauteil in Form eines geschlossenen Hohlkörpers (4) ausgebildet ist und selbst einen Kraftstoffbehälter bildet.

2. Fußboden nach Anspruch 1, **dadurch gekennzeichnet**, daß der Hohlkörper (5) der Höhe nach verlaufende, den Hohlraum durchsetzende Durchführungen (6) zur Aufnahme von Stützhülsen (7) und Befestigungsschrauben (8) aufweist.

3. Fußboden nach Anspruch 1 oder 2, **dadurch gekennzeichnet**, daß der Hohlkörper (4) abgetrennte Kammern und/oder längsverlaufende Kanäle (10) zur Aufnahme von Fahrzeugeinrichtungen und -zubehör aufweist.

FIG.1

FIG.2